# EUROPÄISCHE PATENTANMELDUNG

(11) **EP 4 830 955 A1**
(43) Veröffentlichungstag der Anmeldung: **28.10.2026**
(21) Anmeldenummer: 26174256.3
(22) Anmeldetag: 23.04.2026
(51) Int. Cl.: B60J 7/16

(54) **LADERAUMABDECKUNG**

(30) Priorität: 25.04.2025 LU 601340
(71) Anmelder: Lapperger, Johann, 86551 Aichach (DE)
(72) Erfinder: Lapperger, Johann, 86551 Aichach (DE)
(74) Vertreter: Paustian & Partner Patentanwälte mbB

(57) **Zusammenfassung**

Die Erfindung betriff eine Laderaumabdeckung welche eine erste Seitenwand, eine zweite Seitenwand und einen Deckel umfasst. Dabei ist der Deckel beweglich parallel einer Längsachse mit der ersten Seitenwand verbunden. Die zweite Seitenwand ist parallel zu einer Längsachse beweglich mit dem Deckel verbunden. Die zweite Seitenwand ist dazu vorgesehen und geeignet ist an einem unteren Ende mit einem Fahrzeug zu verriegeln.

## Beschreibung

Die vorliegende Erfindung bezieht sich auf eine Laderaumabdeckung. Genauer bezieht sich diese Anmeldung auf eine Laderaumabdeckung für einen Fahrzeug zum Gütertransport, wie ein LKW-Aufbau oder Anhänger.

Bei Fahrzeugen zum Gütertransport (Transportfahrzeug) ist es oftmals vorteilhaft, wenn diese über einen Kran von oben be- oder entladen werden können. Dies kann z.B. ein Hallenkran bzw. Portalkran sein. Hierfür gibt es Lösungen das Dach des Transportfahrzeugs z.B. über eine Schiebeplane zu öffnen. Oftmals ist dies jedoch nicht ausreichend, da sperrige Ladung dann durch die entstandene Öffnung durch die Längsführungen der Schiebeplane gehoben werden muss und sich je nach Ladung leicht verhaken kann. Es gibt Lösungen, bei welchen besagte Längsführungen für die Schiebeplane ganz oder teilweise entfernt werden können, um Platz zu schaffen. Dies ist jedoch mit einigem Aufwand verbunden und verlängert den Ladevorgang.

Die vorliegende Anmeldung hat es daher zur Aufgabe eine Laderaumabdeckung mit verbesserten Eigenschaften wie Zeitersparnis beim Ladevorgang und Zugänglichkeit zum Laderaum bereit zu stellen. Diese Aufgabe wird durch eine Laderaumabdeckung und ein Verfahren entsprechend dem beigefügten unabhängigen Anspruch gelöst.

Nach einem Aspekt der vorliegenden Anmeldung umfasst eine Laderaumabdeckung eine erste Seitenwand, eine zweite Seitenwand und einen Deckel, Dabei ist der Deckel beweglich parallel einer Längsachse mit der ersten Seitenwand verbunden. Die Längsachse ist die die Längsachse der Laderaumabdeckung. Nachdem die Laderäume einschlägiger Fahrzeuge, auf welche die Laderaumabdeckung üblicherweise montiert wird, eine ausgeprägte Längserstreckung haben (z.B. die Ladeflächen von LKWs oder Anhängern), ist die Längsachse parallel zu dieser Längserstreckung. Die Lage der Längsachse kann beliebig gewählt werden. Der in dieser Offenbarung verwendete Begriff "parallel" schließt auch konstruktionsbedingte sinnvolle Abweichungen von einer genauen Parallelität ein. Dies können Abweichungen von bis zu 20° sein. Die zweite Seitenwand ist parallel zu einer Längsachse beweglich mit dem Deckel verbunden. Die zweite Seitenwand ist weiterhin dazu vorgesehen und geeignet an einem unteren Ende der zweiten Seitenwand mit einem Fahrzeug zu verriegeln. Die zweite Seitenwand kann höher sein, als der Deckel breit. Das bedeutet, dass die Breite des Deckels, die mit der Fahrzeugbreite (z.B. 2,50m) zusammenhängt, kleiner sein kann, als die hohe der zweiten Seitenwand in geschlossenen Zustand (Fahrzeughöhe). Dies kann den Vorteil haben, dass eine Laderaumabdeckung erlangt werden kann, welche ein barrierefreies Be- und Entladen z.B. mit einem Hallenkran ermöglicht.

Nach einem weiteren Aspekt der vorliegenden Anmeldung weist bei einer Laderaumabdeckung der Deckel bezüglich der ersten Seitenwand einen Schwenkwinkel von mehr als 90° auf. Damit schwenkt die am Deckel schwenkbar befestigte zweite Seitenwand weiter aus einem Bereich einer Öffnung, die zum Be- und Entladen genutzt werden kann. Ein unteres Ende der zweiten Seitenwand kann so näher an die die erste Seitenwand gebracht werden. Dies kann den Vorteil haben, dass ein Beladen weiter vereinfacht wird.

Nach einem weiteren Aspekt der vorliegenden Anmeldung kann bei einer Laderaumabdeckung die zweite Seitenwand an den Deckel geschwenkt werden. Dies kann den Vorteil haben, dass ein Beladen weiter vereinfacht wird.

Nach einem weiteren Aspekt der vorliegenden Anmeldung kann bei einer Laderaumabdeckung die zweite Seitenwand bezüglich des Deckels in zwei entgegengesetzte Schwenkrichtungen schwenken. Dies kann den Vorteil haben, dass z.B. ein Entriegelungsvorgang bzw. der Beginn eines Öffnungsvorganges vereinfacht werden kann und weitere Verriegelungsarten des unteren Endes mit einem Fahrzeug eingesetzt werden können.

Nach einem weiteren Aspekt der vorliegenden Anmeldung umfasst bei einer Laderaumabdeckung zumindest eines von der ersten Seitenwand, der zweiten Seitenwand und dem Deckel eine Schiebeplane. Dies kann den Vorteil haben, dass die Laderaumabdeckung flexibler verwendet werden kann.

Nach einem weiteren Aspekt der vorliegenden Anmeldung umfasst bei einer Laderaumabdeckung die zweite Seitenwand eine Schwenkachse in einem oberen Bereich. Die zweite Seitenwand ist bezüglich des Deckels um diese Schwenkachse schwenkbar. Dies kann den Vorteil haben, dass ein Beladen weiter vereinfacht wird.

Nach einem Aspekt der vorliegenden Anmeldung ist bei einem Fahrzeug mit einer Laderaumabdeckung nach einem der obigen Aspekte das untere Ende dazu vorgesehen und geeignet ist mit dem Bodenbereich des Fahrzeugs zu verriegeln. Dies kann den Vorteil haben, dass die zweite Seitenwand sicher mit dem Fahrzeug verriegelt werden und damit die Ladung gesichert werden kann.

Nach einem Aspekt der vorliegenden Anmeldung umfasst ein Öffnungsverfahren eines Laderaums die Schritte:
- Entriegeln eines unteren Endes einer zweiten Seitenwand
- Schwenken eines Deckels in einer ersten Schwenkrichtung bezüglich einer ersten Seitenwand
- Schwenken der zweiten Seitenwand bezüglich des Deckels in einer zweiten Richtung, wobei die jeweiligen Schwenkachsen parallel zu einer Längsachse sind. Die beiden Schwenkbewegungen können in ihrem Ablauf auch vertauscht oder gleichzeitig ablaufen. Dies kann den Vorteil haben, dass eine Laderaumabdeckung einfach und schnell so geöffnet werden kann, dass ein Be- und Entladen einfach ist.

Nach einem weiteren Aspekt der vorliegenden Anmeldung wird bei einem Öffnungsverfahren der Deckel um mehr als 90° bezüglich der ersten Seitenwand geschwenkt. Dies kann den Vorteil haben, dass ein Beladen weiter vereinfacht wird.

Nach einem weiteren Aspekt der vorliegenden Anmeldung wird bei einem Öffnungsverfahren das untere Ende der zweiten Seitenwand von einem Bodenbereich des Fahrzeugs entriegelt. Dies kann den Vorteil haben, dass eine stabile, aber einfach lösbare Verbindung zwischen dem unteren Ende und dem Fahrzeug erlangt werden kann.

Nach einem weiteren Aspekt der vorliegenden Anmeldung umfasst bei einem Öffnungsverfahren der Schritt des Entriegelns weiterhin nach dem Entriegeln zuerst ein Schwenken der zweiten Seitenwand in der ersten Schwenkrichtung. Die erste Schwenkrichtung ist entgegengesetzt zur zweiten Schwenkrichtung. Dies kann den Vorteil haben, dass ein Entriegelungs- und Öffnungsvorgang einfacher gestaltet werden kann, auch wenn der Verriegelungsmechanismus die zweite Seitenwand umfassend aufwändiger ist.

Nach einem weiteren Aspekt der vorliegenden Anmeldung wird beim Schritt des Schwenkens der zweiten Seitenwand bei einem Öffnungsverfahren um eine Schwenkachse in einem oberen Bereich der zweiten Seitenwand bezüglich des Deckels geschwenkt. Dies kann den Vorteil haben, dass ein Beladen weiter vereinfacht und die Stabilität der Laderaumabdeckung verbessert wird.

Zum besseren Verständnis der Erfindung wird diese anhand der nachfolgenden Figuren näher erläutert. Es zeigen jeweils in stark vereinfachter, schematischer Darstellung:
Fig. 1 eine schematische Seitenansicht eines Fahrzeugs mit Laderaumabdeckung.
Fig. 2 eine weitere schematische Ansicht von einer Stirnseite des Fahrzeugs mit Laderaumabdeckung aus Fig. 1.
Fig. 3 ist eine ähnliche schematische Darstellung zu Fig. 2 eines Öffnungsvorgangs.
Fig. 4 ist eine weitere schematische Darstellung eines Öffnungsvorgangs.
Fig. 5 ist eine weitere schematische Darstellung eines Öffnungsvorgangs.
Fig. 6 ist eine alternative Detailansicht einer Laderaumabdeckung.
Fig. 7 ist ein Ablaufdiagramm eines Verfahrens zum Öffnen einer Laderaumabdeckung.

Einführend sei festgehalten, dass die in der Beschreibung gewählten Lageangaben, wie z.B. oben, unten, seitlich usw. auf die unmittelbar beschriebene sowie dargestellte Figur bezogen sind und diese Lageangaben sind bei einer Lageänderung sinngemäß auf die neue Lage zu übertragen. Die Merkmale der Verfahrensschritte können als Vorrichtungsmerkmale übernommen werden und vice versa.

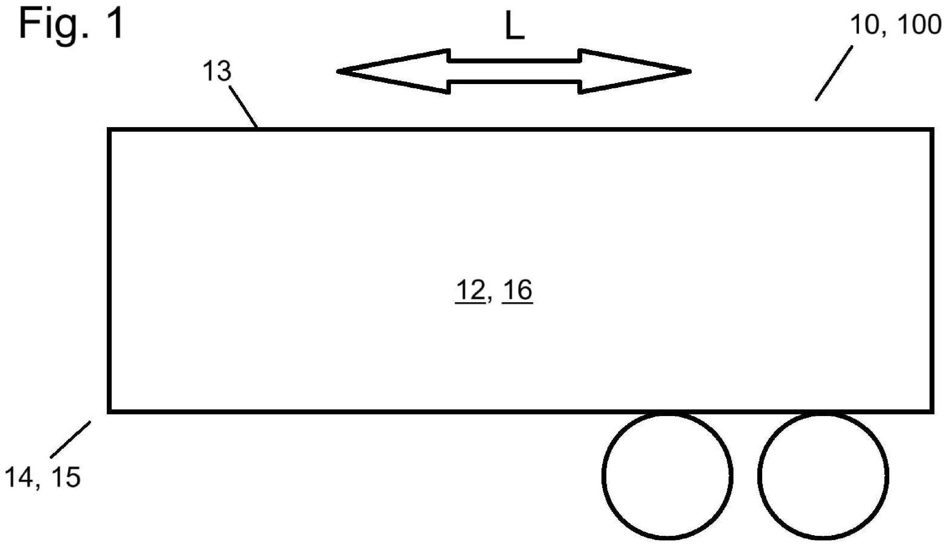

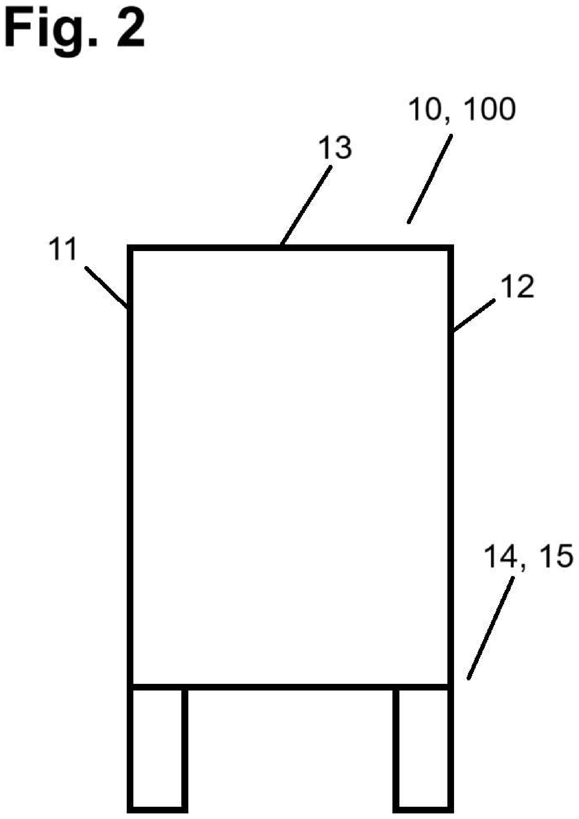

Es wird anfänglich Bezug genommen auf Fig. 1 in welcher eine schematische Darstellung einer Seitenansicht eines Fahrzeugs 100 (in diesem Fall beispielhaft eine LKW-Anhänger) mit einer Laderaumabdeckung 10 gezeigt ist. Die Laderaumabdeckung 10 umfasst eine zweite Seitenwand 12, einen Deckel 13, sowie eine erste Seitenwand 11, welche allerdings in Fig. 1 nicht zu sehen ist, da sie hinter der zweiten Seitenwand 12 in der Zeichenebene liegt und daher von dieser verdeckt wird. Die Laderaumabdeckung 10 weist eine gegenüber den anderen Dimensionen (siehe auch Fig. 2) eine große Längserstreckung, wie dies üblich ist. Eine Längsachse L erstreckt sich parallel zur Längserstreckung oder z.B. auch einer gewöhnlichen Fahrtrichtung oder Fahrzeuglängsmittelebene. Die zweite Seitenwand umfasst ein unteres Ende 14 welches dazu vorgesehen und geeignet ist in Eingriff mit dem Fahrzeug 100 auf dem die Laderaumabdeckung 10 montiert ist bzw. mit einem Bodenbereich 15. Die zweite Seitenwand 12 umfasst eine Schiebeplane 16, wie dies grundsätzlich von anderen Fahrzeugaufbauten bekannt ist. Der Deckel 13 und die erste Seitenwand 11 können ganz wie gewünscht jeweils auch eine Schiebeplane 16 umfassen. Die zweite Seitenwand 12 ist bezüglich des Deckels 13 entlang der mit dem Bezugszeichen 13 in Fig. 1 bezeichneten Kante schwenkbar.

Fig. 2 ist eine schematische Ansicht von einer Stirnseite des in Fig. 1 dargestellten Fahrzeugs 100 mit Laderaumabdeckung 10. Damit ist die Ansicht der Fig. 2 um 90° gegenüber der Ansicht der Fig. 1 gedreht und die Längsachse L durchstößt in einem 90° Winkel die Zeichenebene. In der Ansicht von Fig. 2 würde von vorne auf das Fahrzeug 100 geschaut werden, so wie dieses in einem Rückspiegel zu sehen wäre. Die Fig. 2 stellt die Laderaumabdeckung 10 in einem geschlossenen Zustand dar, in welchem das untere Ende 14 mit einem Bodenbereich 15 verriegelt ist. Die zweite Seitenwand 12 ist schwenkbar mit dem Deckel 13 verbunden und der Deckel 13 ist schwenkbar mit der ersten Seitenwand 11 verbunden.

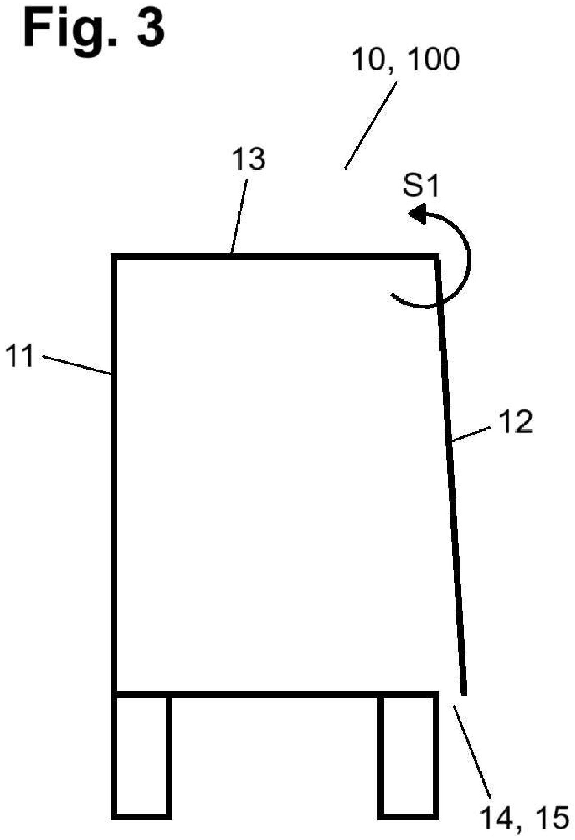

Fig. 3 ist eine schematische Ansicht ähnlich zu Fig. 2, wobei hier ein Zwischenschritt in einem Öffnungsverfahren der Laderaumabdeckung 10 dargestellt ist. Die zweite Seitenwand 12 ist vom Bodenbereich 15 entriegelt. Weiterhin ist die zweite Seitenwand 12 in einer ersten Schwenkrichtung S1 bezüglich des Deckels 13 vom Fahrzeug 100 weg geschwenkt bzw. das untere Ende 14 ist vom Bodenbereich 15 weggeschwenkt.

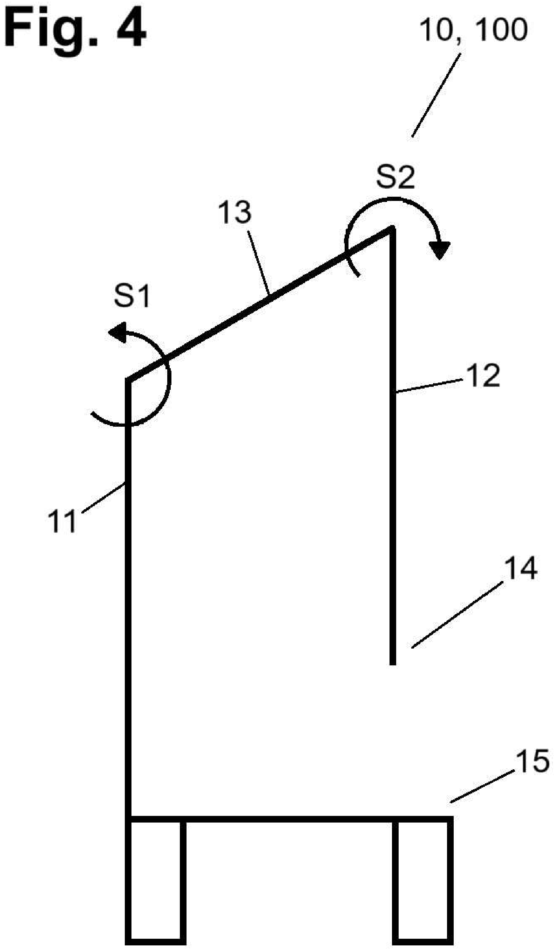

Fig. 4 ist eine schematische Ansicht ähnlich zu den Figs. 2 und 3, wobei hier ein weiterer und zeitlich späterer Zwischenschritt in einem Öffnungsverfahren der Laderaumabdeckung 10 dargestellt ist. Der Deckel 13 ist bezüglich der ersten Seitenwand 11 in der ersten Schwenkrichtung S1 geschwenkt und die zweite Seitenwand 12 ist bezüglich dem Deckel 13 in einer zweiten Schwenkrichtung S2 geschwenkt. Die zweite Schwenkrichtung S2 ist entgegengesetzt zur ersten Schwenkrichtung S1. Die Schwenkbewegung des Deckels 13 bezüglich der ersten Seitenwand 11 und die Schwenkbewegung der zweiten Seitenwand 12 bezüglich des Deckels 13 laufen vorzugsweise gleich zeitig ab, können aber auch in zeitlichen Intervallen wechselseitig ablaufen, da die Schwenkbewegungen grundsätzlich voneinander abhängig sind, da das Schwenken des Deckels 13 bezüglich der ersten Seitenwand 11 den notwendigen Platz schafft, dass die zweite Seitenwand 12 geschwenkt werden kann. Weiterhin ist zu beachten, dass bei den Schwenkbewegungen das untere Ende 14 nicht mit einer Ladung im Innenraum kollidiert. Es kann daher das untere Ende 14 deutlich weiter nach rechts in Fig. 4 geschwenkt werden, als dies dargestellt ist.

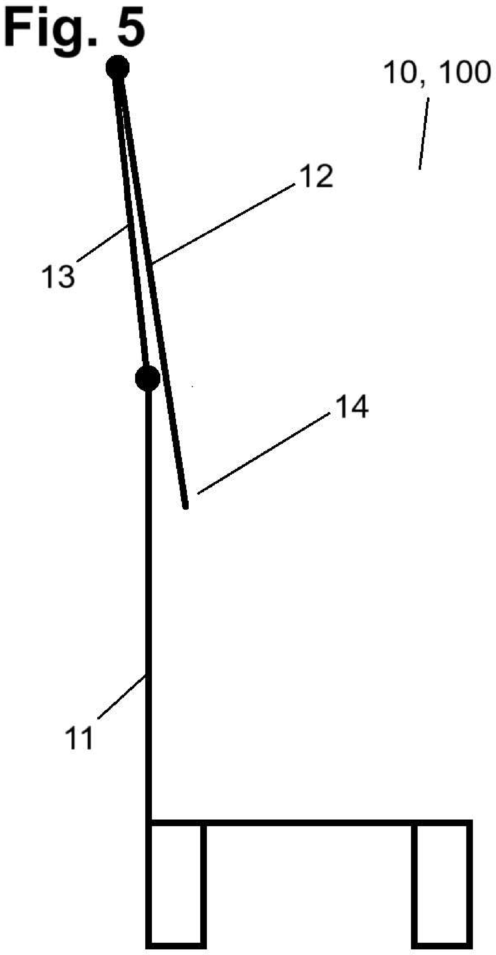

Fig. 5 ist eine schematische Ansicht ähnlich zu den Figs. 2 bis 4, wobei hier eine beispielhafte Endlage in einem Öffnungsverfahren der Laderaumabdeckung 10 dargestellt ist. Der Deckel 13 ist bezüglich seiner Ausgangslage und der ersten Seitenwand 11 um mehr als 90° geschwenkt. Die zweite Seitenwand 12 ist an den Deckel 13 geschwenkt Dies ist vorteilhaft, da so das untere Ende 14 so nah wie möglich an die erste Seitenwand 11 gebracht werden kann. Der exakte Schwenkwinkel des Deckels 13 bezüglich der ersten Seitenwand 11 hängt von der tatsächlichen Konstruktion und den sich ergebenden Dimensionen ab. I

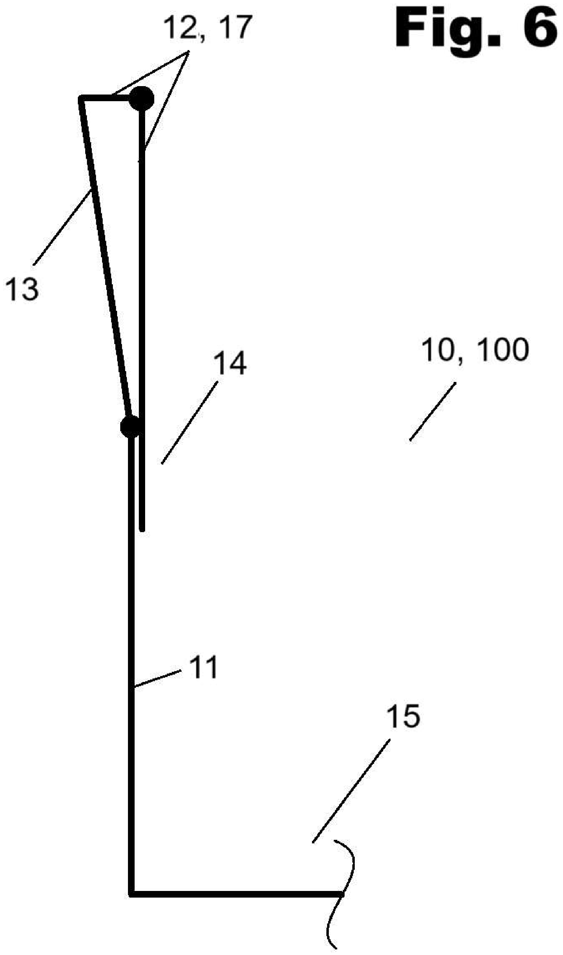

Fig. 6 zeigt einen schematischen Detailausschnitt einer Variante der Laderaumabdeckung 10 in einer Fig. 5 entsprechenden Position. Hier ist die Schwenkachse, um welche sich die zweite Seitenwand 12 bezüglich des Deckels 13 schwenken lässt in einen oberen Bereich 17 der zweiten Seitenwand 12 verschoben gegenüber der Variante dargestellt in Fig. 5. Hieraus ergibt sich, dass sich das untere Ende 14 bzw. die zweite Seitenwand 12 nahe an die erste Seitenwand 11 schwenken lassen kann. Der Schwenkwinkel des Deckels 13 bezüglich der ersten Seitenwand 11 ist hier auch größer 90°. Zum besseren Verständnis ist die Lage der Schwenkachsen in Figs. 5 und 6 durch Punkte gekennzeichnet. In den in Figuren 5 und 6 dargestellten Beispielen ist die Fahrzeughöhe größer, als die Fahrzeugbreite (wie dies üblich ist). Daher steht die zweite Seitenwand 12 über den Deckel hinaus (unteres Ende mit Bezugszeichen 14).

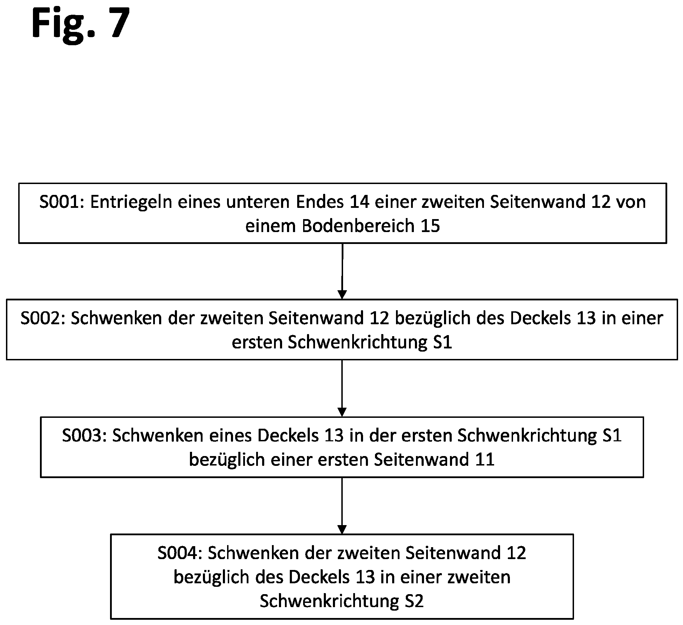

Fig. 7 stellt ein Ablaufdiagramm eines Öffnungsverfahrens. In einem Schritt S001 wird ein unteres Endes 14 einer zweiten Seitenwand 12 von einem Bodenbereich 15 entriegelt. Der Bodenbereich 15 kann von einem Fahrzeug 100 umfasst sein. In einem Schritt S002 schwenkt die zweite Seitenwand 12 bezüglich des Deckels 13 in einer ersten Schwenkrichtung S1. Mit dieser Schwenkbewegung entfernt sich das untere Ende 14 von dem Bodenbereich 15 seitlich, wie dies in Fig. 3 dargestellt ist. In einem Schritt S003 wird ein Deckel 13 in der ersten Schwenkrichtung S1 bezüglich einer ersten Seitenwand 11 geschwenkt. In einem Schritt S004 wird die zweite Seitenwand 12 bezüglich des Deckels 13 in einer zweiten Schwenkrichtung S2 geschwenkt. Die Schritte S003 und S004 können vertauscht ablaufen, sie können wechselseitig ablaufen oder gleichzeitig ablaufen oder in einer Kombination der genannten Möglichkeiten. Die Bewegung der Schritte S003 und S004 endet, wenn die zweite Seitenwand 12 so nah wie konstruktiv möglich an die erste Seitenwand 11 gebracht ist (siehe z.B. Figs. 5 und 6).

Es sei an dieser Stelle bemerkt, dass die Erfindung nicht auf die speziell dargestellten Ausführungsvarianten eingeschränkt ist, sondern Variationsmöglichkeiten aufgrund der Lehre zum technischen Handeln durch gegenständliche Erfindung im Können des auf diesem technischen Gebiet tätigen Fachmannes liegt. Ein Schließvorgang verläuft in der umgekehrten Reihenfolge der Abläufe, wie diese oben beschrieben sind.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus der Erfindung Elemente teilweise unmaßstäblich und/oder vergrößert und/oder verkleinert dargestellt wurden. Bezug auf Größenverhältnisse kann nur genommen werden, wenn dies ausdrücklich erwähnt wird.

### Bezugszeichenliste

- 10: Laderaumabdeckung
- 11: erste Seitenwand
- 12: zweite Seitenwand
- 13: Deckel
- 14: unteres Ende
- 15: Bodenbereich
- 16: Schiebeplane
- 17: oberen Bereich

- 100: Fahrzeug

- L: Längsachse
- S1: erste Schwenkrichtung
- S2: zweite Schwenkrichtung

## Patentansprüche

1. Laderaumabdeckung (10) umfassend eine erste Seitenwand (11), eine zweite Seitenwand (12) und einen Deckel (13), wobei der Deckel beweglich parallel einer Längsachse (L) mit der ersten Seitenwand verbunden ist, und wobei die zweite Seitenwand parallel zu einer Längsachse beweglich mit dem Deckel verbunden ist, und wobei die zweite Seitenwand dazu vorgesehen und geeignet ist an einem unteren Ende (14) mit einem Fahrzeug (100) zu verriegeln.

2. Laderaumabdeckung (10) nach Anspruch 1, wobei der Deckel (13) bezüglich der ersten Seitenwand (11) einen Schwenkwinkel von mehr als 90° aufweist.

3. Laderaumabdeckung (10) nach Anspruch 1 oder 2, wobei die zweite Seitenwand (12) an den Deckel (13) geschwenkt werden kann.

4. Laderaumabdeckung (10) nach einem der vorangegangenen Ansprüche, wobei die zweite Seitenwand (12) bezüglich des Deckels (13) in zwei entgegengesetzte Schwenkrichtungen schwenken kann.

5. Laderaumabdeckung (10) nach einem der vorangegangenen Ansprüche, wobei zumindest eines von der ersten Seitenwand (11), der zweiten Seitenwand (12) und dem Deckel (13) eine Schiebeplane (16) umfasst.

6. Laderaumabdeckung (10) nach einem der vorangegangenen Ansprüche, wobei die zweite Seitenwand (12) eine Schwenkachse in einem oberen Bereich (17) umfasst.

7. Fahrzeug (100) mit Laderaumabdeckung (10) nach einem der vorangegangenen Ansprüche, wobei das untere Ende (14) dazu vorgesehen und geeignet ist mit dem Bodenbereich (15) des Fahrzeugs zu verriegeln.

8. Öffnungsverfahren für einen Laderaum, umfassend die Schritte: Entriegeln eines unteren Endes (14) einer zweiten Seitenwand (12), Schwenken eines Deckels (13) in einer ersten Schwenkrichtung (S1) bezüglich einer ersten Seitenwand (11), Schwenken der zweiten Seitenwand bezüglich des Deckels in einer zweiten Schwenkrichtung (S2), wobei die jeweiligen Schwenkachsen parallel zu einer Längsachse (L) sind.

9. Öffnungsverfahren nach Anspruch 8, wobei der Deckel (13) um mehr als 90° bezüglich der ersten Seitenwand (11) geschwenkt wird.

10. Öffnungsverfahren nach Anspruch 8 oder 9, wobei das untere Ende (14) der zweiten Seitenwand (12) von einem Bodenbereich (15) des Fahrzeugs entriegelt wird.

11. Öffnungsverfahren nach einem der Ansprüche 8 bis 10, wobei der Schritt des Entriegelns weiterhin nach dem Entriegeln zuerst ein Schwenken der zweiten Seitenwand (14) in der ersten Schwenkrichtung (S1) umfasst, welche entgegengesetzt zur zweiten Schwenkrichtung (S2) ist.
